# FASCICULE DE BREVET EUROPEEN

(11) **EP 1 858 121 B1**
(45) Date de publication et mention de la délivrance du brevet: **16.11.2016**
(21) Numéro de dépôt: 07108081.6
(22) Date de dépôt: 11.05.2007
(51) Int. Cl.: H01R 13/58, B60C 23/04, H01R 12/57

(54) **Module électronique destiné à être intégré dans un pneumatique et procédé d'obtention d'un tel module**
Elektronisches Modul für einen Luftreifen und Verfahren zur Herstellung einem solchen Modul
Electronic module meant to be integrated in a pneumatic tire and method for producing it

(30) Priorité: 19.05.2006 FR 0604638
(43) Date de publication de la demande: 21.11.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Robert, Michel, 63200, Cellule (FR)
(74) Mandataire: Dequire, Philippe Jean-Marie Denis

(56) Documents cités:
- EP-A- 1 589 614
- EP-A2- 0 689 950
- WO-A2-03/038747
- US-A- 5 667 390

## Description

La présente invention concerne un module électronique destiné à être intégré à un pneumatique, un dispositif électronique comprenant un tel module, un pneumatique muni d'un tel dispositif et un procédé d'obtention d'un tel dispositif.

Il est connu d'intégrer à un pneumatique de véhicule un dispositif électronique d'identification ou de contrôle du pneumatique, par exemple un dispositif électronique de mesure de la pression ou de la température du pneumatique.

Un tel dispositif électronique comprend généralement un module électronique de petites dimensions, tel qu'une puce électronique, relié à un fil électrique constituant une antenne d'émission de données fournies par le module ou de réception d'énergie. Le module électronique comprend alors au moins un organe de connexion électrique du fil.

Le dispositif électronique est par exemple intégré au pneumatique en étant collé à sa surface ou en étant noyé dans sa masse. Par conséquent, au cours d'une utilisation normale du véhicule automobile, le dispositif électronique subit des contraintes engendrées par des déformations du pneumatique.

Le fil (du fait de sa souplesse) et le module électronique (du fait de ses petites dimensions et de sa rigidité) résistent correctement à ces contraintes. En revanche, la jonction entre le fil et le module électronique est particulièrement sensible à ces contraintes.

Pour relier le fil électrique au module électronique, on connaît deux types de jonctions.

Le fil peut être connecté à l'organe de connexion électrique du module électronique par soudure. Cependant, la soudure ne permet pas d'obtenir une jonction suffisamment robuste pour résister aux contraintes mécaniques répétées engendrées par des déformations du pneumatique. Le document EP 1 589 614 A1 présente un module électrique destiné à être intégré dans un pneumatique comprenant un organe fonctionnel fixé mécaniquement à un support et connecté mécaniquement et électriquement à un fil, dans lequel, en amont du point de connexion mécanique et électrique du fil, le fil est noyé dans un matériau caoutchouteux pour réduire les déformations du fil à proximité du point de connexion mécanique et électrique.

Le fil peut également être connecté à l'organe de connexion électrique par sertissage. Le sertissage permet une bonne fixation mécanique mais ne permet pas d'assurer une liaison électrique fiable.

L'invention a pour but de remédier aux inconvénients des jonctions connues en fournissant un module électronique destiné à être intégré dans un pneumatique et comprenant des moyens permettant d'assurer une liaison électriquement et mécaniquement fiable avec un fil.

A cet effet l'invention a pour objet un module électronique destiné à être intégré dans un pneumatique, comprenant un organe fonctionnel fixé mécaniquement à un support et au moins un organe de connexion électrique d'un fil, caractérisé en ce qu'il comprend en outre un organe de fixation mécanique du fil, distinct de l'organe de connexion électrique, pour fixer mécaniquement le fil au support et reprendre intégralement les efforts exercés sur le fil.

Le module électronique de l'invention possède deux organes de connexion distincts assurant respectivement une fonction de connexion électrique et une fonction de fixation mécanique. Cela permet de concevoir séparément chacun des organes de manière à optimiser leur fonction. Ainsi, grâce à l'invention, on peut obtenir un module électronique comprenant des moyens permettant d'assurer une liaison électriquement et mécaniquement fiable avec un fil.

De préférence l'organe de fixation mécanique du fil comprend des moyens de sertissage. Les moyens de sertissage permettent en effet une fixation mécanique rapide et efficace.

De manière optionnelle, l'organe de fixation mécanique du fil comprend des moyens d'encliquetage et/ou des moyens de collage.

De préférence, le module comprend, pour le fil, un passage aboutissant à l'organe de connexion électrique, l'organe de fixation mécanique étant positionné sur le passage, en amont de l'organe de connexion électrique. Cette disposition des organes de connexion et de fixation sur le module est particulièrement intéressante lorsque le fil est connecté à l'organe de connexion électrique par soudure au moyen de brasure. En effet, dans le cas où le fil est composé d'un assemblage de plusieurs brins de faible diamètre, la brasure a tendance à remonter entre ces brins par capillarité et à rigidifier ainsi l'assemblage. L'organe de fixation mécanique du fil empêche alors cette remontée de brasure, ce qui permet au fil de conserver tout son potentiel de souplesse.

De façon optionnelle, l'organe de fixation mécanique est conformé pour s'appliquer sur une gaine du fil.

L'invention a également pour objet un dispositif électronique destiné à être intégré à un pneumatique, caractérisé en ce qu'il comprend un module électronique tel que précédemment défini et au moins un fil constitué par un tronçon lié au module et un tronçon libre, le tronçon lié du fil étant connecté à l'organe de connexion électrique et fixé au module au moyen de l'organe de fixation mécanique. De préférence, le fil est connecté à l'organe de connexion électrique par soudure. De manière optionnelle, le dispositif électronique comprend en outre une enveloppe de protection du module et du tronçon lié du fil. La fonction de cette enveloppe de protection est, d'une part, de protéger le module, et d'autre part, de limiter les perturbations du pneumatique engendrées par le module.

De préférence, l'enveloppe recouvre en outre une partie du tronçon libre du fil de manière à former des moyens de guidage du tronçon libre, par exemple en guidant le tronçon libre de manière rectiligne.

Éventuellement, le dispositif électronique comprend deux fils connectés au module, l'enveloppe étant conformée de manière que les tronçons libres des fils sont sensiblement coaxiaux.

Ainsi, les efforts exercés par les deux fils sur le module électronique tendent à se compenser. De préférence, les moyens de guidage sont de rigidité croissante en direction du module. Ceci permet d'assurer une transition mécanique progressive entre le module électronique qui est rigide et le fil qui est souple. Ainsi, les contraintes dues aux déformations du pneumatique ne sont pas localisées au niveau de la jonction entre le module électronique et le fil, mais progressivement réparties.

Selon une première variante, l'enveloppe est constituée par une résine surmoulée sur le module et le fil. Selon une seconde variante, l'enveloppe comprend un étui contenant le module, l'étui étant rempli de résine. Par exemple, l'étui est formé de deux demi-coques.

De préférence, l'enveloppe a sensiblement une forme de galet, c'est-à-dire une forme qui limite les perturbations du pneumatique engendrées par le dispositif. En particulier, dans le cas où le dispositif électronique est noyé dans la masse du pneumatique, une enveloppe en forme de galet ou ovoïde permet d'éviter d'emprisonner de l'air dans le pneumatique, au contact avec le dispositif électronique. L'invention a également pour objet un pneumatique de véhicule auquel est intégré un dispositif électronique tel que précédemment défini. L'invention a également pour objet un procédé d'obtention d'un dispositif électronique tel que défini précédemment, caractérisé en ce que l'on fixe le fil avant de le souder. De cette manière, la fixation du fil empêche la brasure de remonter le long du fil par capillarité.

L'invention sera mieux comprise à la lecture de la description faite en se référant aux figures annexées dans lesquelles :
- la figure 1 est un schéma d'un pneumatique muni d'un dispositif électronique selon l'invention ;
- la figure 2 est un schéma éclaté du dispositif électronique représenté sur la figure 1 ;
- la figure 3 est un schéma du dispositif électronique de la figure 2 ; et
- la figure 4 est un schéma d'une variante du dispositif électronique représenté sur la figure 2.

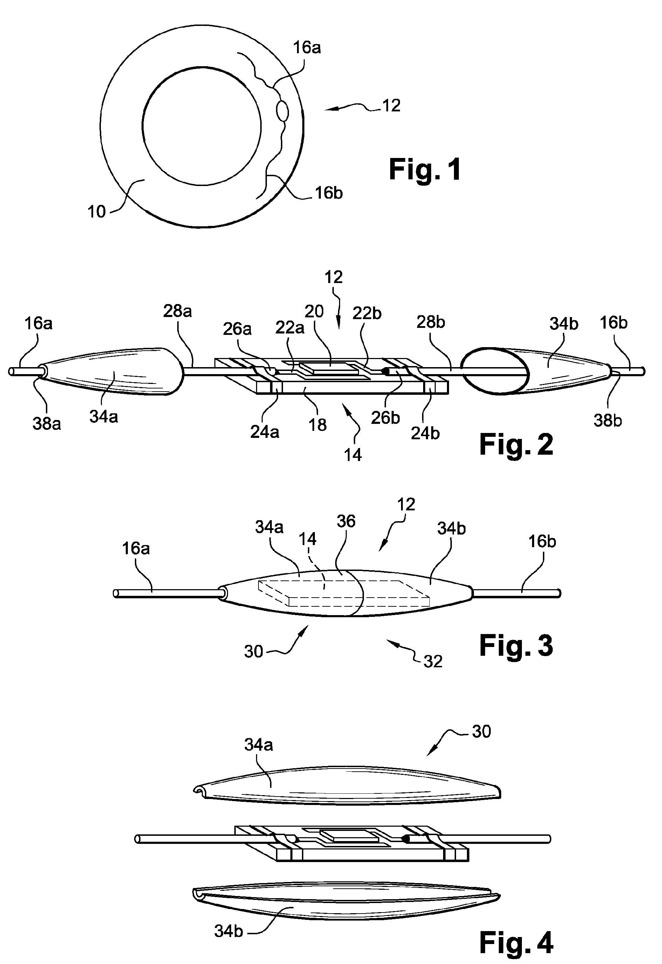

On a représenté sur la figure 1 un pneumatique, désigné par la référence générale 10, muni d'un dispositif électronique 12 selon l'invention. Dans l'exemple représenté, le dispositif électronique 12 est noyé dans un flanc du pneumatique 10. Les modules selon l'invention peuvent aussi être noyés dans des patchs caoutchouteux destinés à être collés sur la paroi intérieure d'un pneumatique ou des éléments déformables utilisés dans la liaison au sol d'un véhicule.

Le dispositif électronique 12 est représenté plus en détail sur la figure 2. Il comprend un module électronique 14 et des premier 16a et second 16b fils électriquement conducteurs.

Le module électronique 14 comprend un support 18 et un organe fonctionnel 20 porté par le support 18. L'organe fonctionnel 20 est par exemple un capteur de pression, un capteur de température ou un dispositif d'identification du pneumatique tel qu'un dispositif RFID (de l'anglais Radio Frequency Identification Device).

Le support 18 comprend des premier 22a et second 22b organes de connexion électrique auxquels les fils 16a et 16b sont respectivement connectés par soudure. La soudure est obtenue de façon classique au moyen de brasure. Les organes de connexion 22a et 22b sont constituées de bandes conductrices disposées à la surface du support 18. L'organe fonctionnel 20 est également connecté aux organes de connexion électrique 22a et 22b.

Les organes 22a et 22b de connexion électrique permettent donc d'établir une liaison électrique entre l'organe fonctionnel 20 et les fils 16a et 16b.

Le support 18 comprend également des bagues de sertissage 24a, 24b des fils 16a et 16b formant des organes 24a, 24b de fixation mécanique des fils.

Chaque fil 16a et 16b comprend un tronçon 26a, 26b lié au module 14 et un tronçon libre 28a, 28b. Chaque tronçon lié 26a, 26b est connecté par soudure à l'organe 22a et 22b de connexion électrique et fixé au module au moyen des bagues de sertissage 24a, 24b.

Les bagues de sertissage 24a, 24b assurent la fixation mécanique des fils 16a et 16b au support 18, tandis que la soudure des tronçons liés 26a, 26b aux organes 22a et 22b de connexion électrique assure la liaison électrique entre les fils et l'organe fonctionnel 20.

Chaque bague de sertissage 24a, 24b est placée entre le tronçon libre 28a, 28b du fil et l'organe 22a et 22b de connexion électrique. Ainsi, la partie du module électronique portant le tronçon lié du fil 16a, 16b définit un passage aboutissant à l'organe de connexion électrique, l'organe de fixation mécanique étant positionné sur le passage, en amont de l'organe de connexion électrique.

Grâce à cette disposition des organes de fixation et de connexion du fil, des efforts exercés sur le tronçon libre du fil 16a, 16b sont intégralement repris par les bagues de sertissage 24a et 24b. En particulier, les efforts exercés sur la soudure entre le fil 16a, 16b et l'organe 22a et 22b de connexion électrique sont très faibles, ce qui permet d'obtenir une bonne tenue de cette soudure au cours du temps et donc une bonne liaison électrique entre le fil et l'organe fonctionnel 20.

De plus, il est avantageux de souder le fil à l'organe de connexion électrique après l'avoir serti. En effet, la bague de sertissage empêche alors la brasure de la soudure de remonter dans le tronçon libre du fil par capillarité.

Le dispositif électronique 12 comprend en outre une enveloppe 30 de protection du module électronique 14. Cette enveloppe 30, représentée sur les figures 2 et 3, comprend, d'une part, un étui 32 formé de deux demi-coques 34a et 34b, et d'autre part, de la résine 36 remplissant l'étui 32. La résine empêche le module électronique 14 de se déplacer à l'intérieur de l'étui 32 ce qui le protège des chocs que peut subir le dispositif électronique.

La figure 2 représente le dispositif électronique 12 avant montage des deux demi-coques 34a et 34b sur le module électronique et la figure 3 représente le dispositif électronique 12 après montage des deux demi-coques 34a et 34b.

Les deux demi-coques 34a et 34b ont chacune une forme sensiblement conique. Les bases des cônes sont en contact l'une avec l'autre lorsque les demi-coques sont montées sur le module électronique. Chaque demi-coque 34a et 34b recouvre en partie le tronçon libre 28a, 28b du fil de manière à former des moyens de guidage rectiligne du tronçon libre. A cet effet, le sommet de chaque demi-coque comprend un orifice 38a, 38b traversé par le tronçon libre du fil.

Grâce à sa forme conique, chaque demi-coque 34a et 34b forme des moyens de guidage du fil de rigidité décroissante depuis sa base jusqu'à son sommet, c'est-à-dire que la rigidité des moyens de guidage est croissante en direction du module électronique 14. Ceci permet une bonne répartition des contraintes s'exerçant sur le dispositif électronique 12 lorsqu'il est intégré au pneumatique 10. En l'absence de ces moyens de guidage de rigidité croissante, les contraintes seraient localisées au niveau des bagues de sertissage 24a, 24b ce qui fragiliserait la liaison entre le fil et le module électronique.

Enfin, les demi-coques 34a, 34b sont disposées de manière que les tronçons libres 28a, 28b des deux fils sont sensiblement coaxiaux. Ainsi, les efforts exercés par les fils sur le module électronique 14 tendent à se compenser.

L'invention ne se limite pas au mode de réalisation précédemment décrit.

En effet, la figure 4 représente un dispositif électronique selon l'invention comprenant une variante des deux demi-coques de l'étui 32.

Selon une autre variante non-représentée, l'enveloppe est constituée de résine surmoulée sur le module et le fil en une ou plusieurs couches de rigidité décroissantes successivement surmoulées selon la forme appropriée. Ces résines peuvent être constituées d'un matériau thermoplastique ou thermodurcissable ou caoutchouteux.

L'invention n'est pas limitée aux exemples décrits et représentés et diverses modifications peuvent y être apportées sans sortir de son cadre défini par les revendications annexées.

## Revendications

1. Module électronique (14) destiné à être intégré dans un pneumatique (10), un patch pour pneumatique ou un élément déformable utilisé dans la liaison au sol d'un véhicule, comprenant un organe fonctionnel (20) fixé à un support (18) et au moins un organe (22a, 22b) de connexion électrique d'un fil (16a, 16b) à l'organe fonctionnel (20), le module électronique (14) comprend en outre un organe (24a, 24b) de fixation mécanique du fil (16, 16b), distinct de l'organe (22a, 22b) de connexion électrique, pour fixer mécaniquement le fil au support (18) et reprendre intégralement les efforts exercés sur le fil (16a, 16b), le module électronique (14) étant **caractérisé en ce que** l'organe (24a, 24b) de fixation mécanique du fil (16a, 16b) comprend des moyens de sertissage ou des moyens d'encliquetage.

2. Module (14) selon la revendication 1, dans lequel l'organe (24a, 24b) de fixation mécanique du fil comprend des moyens de collage.

3. Module (14) selon l'une quelconque des revendications 1 et 2, comprenant, pour le fil, un passage aboutissant à l'organe (22a, 22b) de connexion électrique, l'organe (24a, 24b) de fixation mécanique étant positionné sur le passage, en amont de l'organe (22a, 22b) de connexion électrique.

4. Module (14) selon l'une quelconque des revendications 1 à 3, dans lequel l'organe de fixation mécanique est conformé pour s'appliquer sur une gaine du fil.

5. Dispositif (12) électronique destiné à être intégré à un pneumatique, **caractérisé en ce qu**'il comprend un module (14) selon l'une quelconque des revendications 1 à 4 et au moins un fil (16a, 16b) comprenant un tronçon (26a, 26b) lié au module et un tronçon libre (28a, 28b), le tronçon lié (26a, 26b) du fil étant connecté à l'organe (22a, 22b) de connexion électrique et fixé au module (14) au moyen de l'organe (24a, 24b) de fixation mécanique.

6. Dispositif (12) selon la revendication 5, dans lequel le fil (16a, 16b) est connecté à l'organe (22a, 22b) de connexion électrique par soudure.

7. Dispositif (12) selon l'une des revendications 5 ou 6, comprenant en outre une enveloppe (30) de protection du module (14) et du tronçon lié (26a, 26b) du fil.

8. Dispositif (12) selon la revendication 7, dans lequel l'enveloppe (30) protège en outre une partie du tronçon libre (28a, 28b) du fil de manière à former des moyens de guidage du tronçon libre (28a, 28b).

9. Dispositif (12) selon la revendication 8, dans lequel les moyens de guidage guident le tronçon libre (28a, 28b) de manière rectiligne.

10. Dispositif (12) selon la revendication 9, comprenant deux fils (16a, 16b) connectés au module (14), dans lequel l'enveloppe (30) est conformée de manière que les tronçons libres (28a, 28b) des deux fils sont sensiblement coaxiaux.

11. Dispositif (12) selon l'une quelconque des revendications 8 à 10, dans lequel les moyens de guidage sont de rigidité croissante en direction du module.

12. Dispositif (12) selon l'une quelconque des revendications 7 à 11, dans lequel l'enveloppe (30) est constituée par une résine surmoulée sur le module et le fil.

13. Dispositif (12) selon l'une quelconque des revendications 7 à 11, dans lequel l'enveloppe (30) est constituée par plusieurs couches de résines de rigidité décroissante successivement surmoulées sur le module et le fil.

14. Dispositif (12) selon l'une quelconque des revendications 7 à 11, dans lequel l'enveloppe (30) comprend un étui (32) contenant le module et de la résine (36) remplissant l'étui.

15. Dispositif (12) selon la revendication 14, dans lequel l'étui (32) est formé de deux demi-coques (34a, 34b).

16. Dispositif (12) selon l'une quelconque des revendications 7 à 15, dans lequel l'enveloppe a sensiblement une forme de galet.

17. Pneumatique de véhicule, auquel est intégré un dispositif électronique selon l'une quelconque des revendications 5 à 16.

18. Procédé d'obtention d'un dispositif (12) électronique, ledit dispositif (12) étant destiné à être intégré à un pneumatique, ledit dispositif (12) comprenant un module électronique (14) incluant un organe fonctionnel (20) fixé à un support (18) et au moins un organe (22a, 22b) de connexion électrique d'un fil (16a, 16b) à l'organe fonctionnel (20) et un organe (24a, 24b) de fixation mécanique du fil (16a, 16b), distinct de l'organe (22a, 22b) de connexion électrique, pour fixer mécaniquement le fil au support (18) et reprendre intégralement les efforts exercés sur le fil (16a, 16b), l'organe de fixation mécanique du fil (16a, 16b) comprenant des moyens de sertissage ou des moyens d'encliquetage, le dispositif comprenant aussi au moins un fil (16a, 16b) comprenant un tronçon (26a, 26b) lié au module et un tronçon libre (28a, 28b), le tronçon lié (26a, 26b) du fil étant connecté à l'organe (22a, 22b) de connexion électrique et fixé au module (14) au moyen de l'organe (24a, 24b) de fixation mécanique, le fil (16a, 16b) étant connecté à l'organe (22a, 22b) de connexion électrique par soudure, **caractérisé en ce que** l'on fixe le fil avant de le souder.

## Patentansprüche

1. Elektronisches Modul (14), das dazu bestimmt ist, in einen Luftreifen (10), einen Patch für einen Luftreifen oder ein verformbares Element eingebaut zu werden, das in der Bodenverbindung eines Fahrzeugs verwendet wird, das ein an einem Träger (18) befestigtes Funktionsorgan (20) und mindestens ein elektrisches Verbindungsorgan (22a, 22b) eines Drahts (16a, 16b) mit dem Funktionsorgan (20) enthält, das elektronische Modul (14) außerdem ein mechanisches Befestigungsorgan (24a, 24b) des Drahts (16, 16b) enthält, das sich vom elektrischen Verbindungsorgan (22a, 22b) unterscheidet, um den Draht mechanisch am Träger (18) zu befestigen und die auf den Draht (16a, 16b) ausgeübten Kräfte in ihrer Gesamtheit aufzunehmen, wobei das elektronische Modul (14) **dadurch gekennzeichnet ist, dass** das mechanische Befestigungsorgan (24a, 24b) des Drahts (16a, 16b) Einpresseinrichtungen oder Einrasteinrichtungen enthält.

2. Modul (14) nach Anspruch 1, wobei das mechanische Befestigungsorgan (24a, 24b) des Drahts Klebeeinrichtungen enthält.

3. Modul (14) nach einem der Ansprüche 1 und 2, das für den Draht einen Durchgang enthält, der am elektrischen Verbindungsorgan (22a, 22b) mündet, wobei das mechanische Befestigungsorgan (24a, 24b) auf dem Durchgang vor dem elektrischen Verbindungsorgan (22a, 22b) positioniert ist.

4. Modul (14) nach einem der Ansprüche 1 bis 3, wobei das mechanische Befestigungsorgan ausgebildet ist, um sich auf eine Hülle des Drahts aufzulegen.

5. Elektronische Vorrichtung (12), die dazu bestimmt ist, in einen Luftreifen eingebaut zu werden, **dadurch gekennzeichnet, dass** sie ein Modul (14) nach einem der Ansprüche 1 bis 4 und mindestens einen Draht (16a, 16b) enthält, der einen mit dem Modul verbundenen Abschnitt (26a, 26b) und einen freien Abschnitt (28a, 28b) enthält, wobei der verbundene Abschnitt (26a, 26b) des Drahts mit dem elektrischen Verbindungsorgan (22a, 22b) verbunden und am Modul (14) mittels des mechanischen Befestigungsorgans (24a, 24b) befestigt ist.

6. Vorrichtung (12) nach Anspruch 5, wobei der Draht (16a, 16b) mit dem elektrischen Verbindungsorgan (22a, 22b) durch Schweißen verbunden ist.

7. Vorrichtung (12) nach einem der Ansprüche 5 oder 6, die außerdem eine Schutzhülle (30) des Moduls (14) und des verbundenen Abschnitts (26a, 26b) des Drahts enthält.

8. Vorrichtung (12) nach Anspruch 7, wobei die Hülle (30) außerdem einen Teil des freien Abschnitts (28a, 28b) des Drahts schützt, um Führungseinrichtungen des freien Abschnitts (28a, 28b) zu bilden.

9. Vorrichtung (12) nach Anspruch 8, wobei die Führungseinrichtungen den freien Abschnitt (28a, 28b) geradlinig führen.

10. Vorrichtung (12) nach Anspruch 9, die zwei mit dem Modul (14) verbundene Drähte (16a, 16b) enthält, wobei die Hülle (30) so gestaltet ist, dass die freien Abschnitte (28a, 28b) der zwei Drähte im Wesentlichen koaxial sind.

11. Vorrichtung (12) nach einem der Ansprüche 8 bis 10, wobei die Führungseinrichtungen eine in Richtung des Moduls zunehmende Steifheit haben.

12. Vorrichtung (12) nach einem der Ansprüche 7 bis 11, wobei die Hülle (30) aus einem auf das Modul und den Draht aufgeformten Harz besteht.

13. Vorrichtung (12) nach einem der Ansprüche 7 bis 11, wobei die Hülle (30) aus mehreren Schichten von Harzen abnehmender Steifheit besteht, die nacheinander auf das Modul und den Draht aufgeformt werden.

14. Vorrichtung (12) nach einem der Ansprüche 7 bis 11, wobei die Hülle (30) ein Futteral (32) enthält, das das Modul und das Futteral füllendes Harz (36) enthält.

15. Vorrichtung (12) nach Anspruch 14, wobei das Futteral (32) aus zwei Halbschalen (34a, 34b) gebildet wird.

16. Vorrichtung (12) nach einem der Ansprüche 7 bis 15, wobei die Hülle im Wesentlichen eine Rollenform hat.

17. Fahrzeug-Luftreifen, in den eine elektronische Vorrichtung nach einem der Ansprüche 5 bis 16 eingebaut ist.

18. Verfahren zum Erhalt einer elektronischen Vorrichtung (12), wobei die Vorrichtung (12) dazu bestimmt ist, in einen Luftreifen eingebaut zu werden, wobei die Vorrichtung (12) ein elektronisches Modul (14), das ein an einem Träger (18) befestigtes Funktionsorgan (20) und mindestens ein elektrisches Verbindungsorgan (22a, 22b) eines Drahts (16a, 16b) mit dem Funktionsorgan (20) und ein mechanisches Befestigungsorgan (24a, 24b) des Drahts (16a, 16b) umfasst, das sich vom elektrischen Verbindungsorgan (22a, 22b) unterscheidet, um den Draht mechanisch am Träger (18) zu befestigen und die auf den Draht (16a, 16b) ausgeübten Kräfte in ihrer Gesamtheit aufzunehmen, wobei das Organ zur mechanischen Befestigung des Drahts (16a, 16b) Einpresseinrichtungen oder Einrasteinrichtungen enthält, wobei die Vorrichtung auch mindestens einen Draht (16a, 16b) enthält, der einen mit dem Modul verbundenen Abschnitt (26a, 26b) und einen freien Abschnitt (28a, 28b) enthält, wobei der verbundene Abschnitt (26a, 26b) des Drahts mit dem elektrischen Verbindungsorgan (22a, 22b) verbunden und mittels des mechanischen Befestigungsorgans (24a, 24b) am Modul (14) befestigt ist, wobei der Draht (16a, 16b) mit dem elektrischen Verbindungsorgan (22a, 22b) durch Schweißen verbunden ist, **dadurch gekennzeichnet, dass** der Draht vor dem Schweißen befestigt wird.

## Claims

1. Electronic module (14) designed to be incorporated in a tyre (10), a patch for tyre or a deformable element used in the suspension of a vehicle, comprising a functional device (20) fixed to a support (18) and at least one device (22a, 22b) for electrically connecting a wire (16a, 16b) to the functional device (20), also comprising a device (24a, 24b) for mechanically fixing the wire (16a, 16b), separate from the electrical connection device (22a, 22b), for mechanically fixing the wire to the support (18) and fully taking up forces exerted on the wire, the electronic module being **characterized in that** the device (24a, 24b) for mechanically fixing the wire (16a, 16b) comprises crimping means or snap-fitting means.

2. Module (14) according to Claim 1, in which the device (24a, 24b) for mechanically fixing the wire comprises gluing means.

3. Module (14) according to any one of Claims 1 and 2, comprising, for the wire, a passage terminating at the electrical connection device (22a, 22b), the mechanical fixing device (24a, 24b) being positioned on the passage, upstream of the electrical connection device (22a, 22b).

4. Module (14) according to any one of Claims 1 to 3, in which the mechanical fixing device is shaped to be applied to an outer insulation of the wire.

5. Electronic system (12) designed to be incorporated in a tyre, **characterized in that** it comprises a module (14) according to any one of Claims 1 to 4 and at least one wire (16a, 16b) comprising a section (26a, 26b) linked to the module and a free section (28a, 28b), the linked section (26a, 26b) of the wire being connected to the electrical connection device (22a, 22b) and fixed to the module (14) by means of the mechanical fixing device (24a, 24b).

6. System (12) according to Claim 5, in which the wire (16a, 16b) is connected to the electrical connection device (22a, 22b) by soldering.

7. System (12) according to one of Claims 5 or 6, also comprising a jacket (30) protecting the module (14) and the linked section (26a, 26b) of the wire.

8. System (12) according to Claim 7, in which the jacket (30) also protects a part of the free section (28a, 28b) of the wire so as to form means of guiding the free section (28a, 28b).

9. System (12) according to Claim 10, in which the guiding means guide the free section (28a, 28b) in a rectilinear manner.

10. System (12) according to Claim 9, comprising two wires (16a, 16b) connected to the module (14), in which the jacket (30) is shaped in such a way that the free sections (28a, 28b) of the two wires are roughly coaxial.

11. System (12) according to any one of Claims 8 to 10, in which the guiding means are of increasing rigidity in the direction of the module.

12. System (12) according to any one of Claims 7 to 11, in which the jacket (30) is made of a resin moulded onto the module and the wire.

13. System (12) according to any one of Claims 7 to 11, in which the jacket (30) is made up of several layers of resins of decreasing rigidity successively moulded onto the module and the wire.

14. System (12) according to any one of Claims 7 to 11, in which the jacket (30) comprises a case (32) containing the module and the resin (36) filling the case.

15. System (12) according to Claim 14, in which the case (32) is formed by two half-shells (34a, 34b).

16. System (12) according to any one of Claims 7 to 15, in which the jacket is roughly in the shape of a roller.

17. Vehicle tyre, in which is incorporated an electronic system according to any one of Claims 5 to 16.

18. Method of obtaining an electronic system (12), said system (12) being designed to be incorporated in a tyre, said system (12) comprising an electronic module (14) including a functional device (20) fixed to a support (18) and at least one device (22a, 22b) for electrically connecting a wire (16a, 16b) to the functional device (20) and a device (24a, 24b) for mechanically fixing the wire (16a, 16b), separate from the electrical connection device (22a, 22b), for mechanically fixing the wire to the support (18) and fully taking up forces exerted on the wire (16a, 16b), the device for mechanically fixing the wire (16a, 16b) comprising crimping means or snap-fitting means, the system also having a at least one wire (16a, 16b) comprising a section (26a, 26b) linked to the module and a free section (28a, 28b), the linked section (26a, 26b) of the wire being connected to the electrical connection device (22a, 22b) and fixed to the module (14) by means of the mechanical fixing device (24a, 24b), the wire (16a, 16b) being connected to the electrical connection device (22a, 22b) by soldering, **characterized in that** the wire is fixed before it is soldered.
